# EUROPÄISCHE PATENTANMELDUNG

(11) **EP 4 276 371 A1**
(43) Veröffentlichungstag der Anmeldung: **15.11.2023**
(21) Anmeldenummer: 23172497.2
(22) Anmeldetag: 10.05.2023
(51) Int. Cl.: F24F 7/00, E04B 1/70, F24F 13/10, F24F 13/14, F16K 1/24

(54) **MAUERKASTEN**

(30) Priorität: 11.05.2022 DE 102022111834
(71) Anmelder: Berbel Ablufttechnik GmbH, 48432 Rheine (DE)
(72) Erfinder: Üffing, Stefan, 48496 Hopsten (DE); Robusch, Stephan, 48291 Telgte (DE)
(74) Vertreter: Schneiders & Behrendt Bochum

(57) **Zusammenfassung**

Die Erfindung betrifft einen Mauerkasten (1) zum Durchlass von Abluft aus dem Inneren eines Gebäudes durch eine Gebäudewand nach außen, mit einem zwischen mindestens zwei Stellungen verlagerbaren Verschlusselement (2), das dazu ausgelegt ist, eine Durchlassöffnung (3) des Mauerkastens (1) in einer Verschlussstellung zu verschließen und in einer Öffnungsstellung freizugeben, einem Verstellantrieb (4), und wenigstens einem von dem Verstellantrieb (4) angetriebenen Getriebe (5), das an das Verschlusselement (2) zur Verlagerung desselben zwischen der Verschlussstellung und der Öffnungsstellung gekoppelt ist, wobei das Getriebe (5) dazu ausgelegt ist, das Verschlusselement (2) in einer Schwingbewegung, nämlich einer überlagerten Schwenk- und Schubbewegung aus der Verschlussstellung in die Öffnungsstellung zu überführen.

## Beschreibung

Die Erfindung betrifft einen Mauerkasten zum Durchlass von Abluft aus dem Inneren eines Gebäudes durch eine Gebäudewand nach außen, mit einem zwischen mindestens zwei Stellungen verlagerbaren Verschlusselement, das dazu ausgelegt ist, eine Durchlassöffnung des Mauerkastens in einer Verschlussstellung zu verschließen und in einer Öffnungsstellung freizugeben, einem Verstellantrieb, und wenigstens einem von dem Verstellantrieb angetriebenen Getriebe, das an das Verschlusselement zur Verlagerung desselben zwischen der Verschlussstellung und der Öffnungsstellung gekoppelt ist.

Ein solcher Mauerkasten ist aus WO 2007/006568 A1 bekannt. Nachteilig an dem hier beschriebenen Mauerkasten ist, dass der Verstellantrieb und das Getriebe eine besonders hohe Antriebskraft aufbringen müssen, wenn das Verschlusselement in der Verschlussstellung bei winterlichen Witterungsverhältnissen an der Durchlassöffnung des Mauerkastens festgefroren ist. Diese Extrembelastung des Verstellantriebs und des Getriebes muss bei der Auslegung des Mauerkastens konstruktiv beachtet werden, um Schäden am Mauerkasten zu vermeiden. Dies erfordert bei der vorbekannten Konstruktion erhebliche Kraftreserven für den Verstellantrieb und das Getriebe, die bei gemäßigtem Klima nur selten erforderlich sind. Dies macht den Mauerkasten in der Herstellung teuer und erfordert erheblichen Bauraum, der die Durchlassöffnung und somit den Strömungsweg für die Abluft einschränkt.

Es ist daher Aufgabe der Erfindung, einen verbesserten Mauerkasten anzugeben, der einfacher aufgebaut ist, zu geringeren Kosten hergestellt werden kann und weniger Bauraum erfordert, sodass der Strömungsweg für die Abluft weniger eingeschränkt ist.

Gelöst wird diese Aufgabe durch einen Mauerkasten mit den Merkmalen des Anspruchs 1.

Dadurch, dass das Getriebe dazu ausgelegt ist, das Verschlusselement in einer Schwingbewegung, nämlich einer überlagerten Schwenk- und Schubbewegung aus der Verschlussstellung in die Öffnungsstellung zu überführen, lässt sich der Mauerkasten einfacher aufbauen und zu geringeren Kosten herstellen. Außerdem erfordert der Verstellantrieb und das Getriebe weniger Bauraum, da die Konstruktion weniger Kraftreserven für Extrembedingungen erfordert. Mit der Schwingbewegung des Verschlusselements aus der Verschlussstellung in die Öffnungsstellung lässt sich das Verschlusselement auch bei winterlichen Witterungsverhältnissen leicht von der Durchlassöffnung des Mauerkastens lösen, selbst wenn das Verschlusselement an der Durchlassöffnung des Mauerkastens festgefroren ist. Die überlagerte Schwenk- und Schubbewegung aus der Verschlussstellung in die Öffnungsstellung sorgt dafür, dass das über den Verstellantrieb angetriebene Getriebe das Verschlusselement mittels der Schwingbewegung besonders leicht von der Durchlassöffnung des Mauerkastens lösen kann, auch wenn das Verschlusselement an der Durchlassöffnung aufgrund von winterlichen Witterungsverhältnissen festgefroren ist. Durch die von dem Getriebe ausgeübte Schwingbewegung kann das angefrorene Verschlusselement einfach von der Durchlassöffnung schräg abgeschält werden, sodass der hierfür erforderliche Kraftaufwand geringer ist. Damit kann der Verstellantrieb und auch das Getriebe mit geringeren Kraftreserven für Extrembedingungen ausgelegt werden, was erforderlichen Bauraum einspart und den Strömungsweg für die Abluft weniger einschränkt.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß einer vorteilhaften Ausgestaltung der Erfindung ist vorgesehen, dass das Verschlusselement ein kreisrunder Verschlussstopfen ist. Mit einem solchen Verschlussstopfen lässt sich an einer kreisrunden Durchlassöffnung des Mauerkasten besonders einfach eine Abschälfunktion realisieren, die mittels der von dem Getriebe ausgeübten Schwingbewegung aus der Verschlussstellung in die Öffnungsstellung ein leichtes Lösen des Verschlussstopfens aus der kreisrunden Durchlassöffnung gewährleistet.

Besonders bevorzugt ist eine Ausführungsform, die vorsieht, dass das Getriebe zur Ankopplung an den Verschlusstopfen ein außermittig daran angeordnetes Gelenk umfasst, um das der Verschlussstopfen entgegen einer elastischen Rückstellkraft verschwenkbar ist. Das Gelenk ist bevorzugt als Membrangelenk ausgeführt. Die außermittige Ankopplung des Getriebes an den Verschlussstopfen bewirkt eine Verschwenkbewegung des Verschlusselements aus der Verschlussstellung schräg zu einer von dem Getriebe über das Gelenk auf das Verschlusselement ausgeübten Öffnungskraft beim Lösen des Verschlusselements von der Durchlassöffnung. Hierdurch kann eine besonders wirksame Schwingbewegung, nämlich eine überlagerte Schwenk- und Schubbewegung aus der Verschlussstellung in die Öffnungsstellung durch das Getriebe bewirkt werden. Diese Bewegungen bieten eine einfache Abschälfunktion, die mittels der vom Getriebe ausgeübten Kraft ein leichtes Lösen des Verschlussstopfens aus der kreisrunden Durchlassöffnung bei Verlagerung des Verschlusselements aus der Verschlussstellung in die Öffnungsstellung bewirkt. Die elastische Rückstellkraft wird bevorzugt von einem zwischen dem Verschlusselement und Getriebe angeordneten Federelement erzeugt. Hierzu ist das Federelement vorteilhafterweise dazu eingerichtet, bei der Verschwenkbewegung des Verschlusselement belastet zu werden und mittels Federkraft das Verschlusselement auszurichten. In der Verschlussstellung kann das Federelement auf Zug belastet werden, sodass ein dichter Verschluss der Durchlassöffnung mit dem sich mittels der Feder an der Durchlassöffnung passend ausrichtenden Verschlusselements realisiert wird.

Eine besonders vorteilhafte Ausführung der Erfindung bezieht sich darauf, dass die Schwenkbewegung eine Rotationskomponente mit Rotationsachse in einer Ebene des Verschlussstopfens aufweist, wobei die Schubbewegung eine Translationskomponente in Richtung senkrecht zur Ebene des Verschlussstopfens aufweist. Die Rotation des Verschlussstopfens um eine Rotationsachse, die bevorzugt in der Kreisebene oder einer dazu parallelen Ebene liegt, stellt die Rotationskomponente der Schwenkbewegung bereit, welche ein leichtes Lösen des Verschlussstopfens aus der Durchlassöffnung des Mauerkastens ermöglicht. Das Verschlusselement ist bevorzugt an einem am Gelenk befestigten, gegenüber dem Getriebe verschwenkbaren Aufnahmeteller verrastet. Über die Translationskomponente der Schubbewegung kann der Verschlussstopfen einfach von der Durchlassöffnung des Mauerkastens entfernt werden, um den Strömungsweg für die Abluft in der Öffnungsstellung nicht einzuschränken. Hierbei wird der Verschlusstopfen bevorzugt senkrecht zur Kreisebene oder einer dazu parallelen Ebene translatorisch von dem Getriebe verlagert. Die Ebene des Verschlussstopfens wird bevorzugt durch eine äußere Oberfläche gebildet, die zur Witterungsseite des Mauerkastens gerichtet ist.

Eine besonders vorteilhafte Ausführung der Erfindung sieht vor, dass das Getriebe ein ebenes Drehgelenkgetriebe ist. Mit einem ebenen Drehgelenkgetriebe ist ein besonders einfacher und bauraumsparender Aufbau des Antriebs möglich. Da ebene Drehgelenkgetriebe schränkt den Strömungsweg der Abluft durch den Mauerkaste wenig ein, da die Abluft beidseitig an der Ebene des Getriebes vorbeiströmen kann.

Eine vorteilhafte Ausführung der Erfindung sieht vor, dass das Getriebe viergliedrig ist und ein Gestell, zwei mit dem Gestell über jeweils ein Drehgelenk verbundene, unterschiedlich lange Hebelglieder und ein mit beiden Hebelgliedern wiederum jeweils über ein Drehgelenk verbundenes, an das Verschlusselement gekoppeltes Koppelglied umfasst. Mit dem viergliedrigen Getriebe ist ein einfacher und stabiler Aufbau des Mauerkastens möglich. Das Getriebe ermöglicht eine sichere Verlagerung des Verschlusselements aus der Verschlussstellung in die Öffnungsstellung und auch wieder zurück in die Verschlussstellung, und zwar in der gewünschten Schwingbewegung.

Besonders beim Lösen des Verschlusselements von der Durchlassöffnung des Dauerkastens erzeugt das einfach aufgebaute Getriebe eine ausreichende Kraft, um das Verschlusselement auch bei winterlichen Witterungsbedingungen zuverlässig aus der Verschlussstellung herauszubewegen. Auch zum Verschließen der Durchlassöffnung in der Verschlussstellung erzeugt das Getriebe eine ausreichende Kraft. Bevorzugt bildet das Getriebe eine Hebelarmkinematik zur Ausführung einer überlagerten parallelen Verschiebung und Rotation des Verschlusselements zwischen der Verschlussstellung und der Öffnungsstellung.

Besonders vorteilhaft ist eine Ausführungsform, die vorsieht, dass der Verstellantrieb ein an dem Gestell angeordneter Drehantrieb ist, der an eines der Hebelglieder drehmomentübertragend gekoppelt ist. Ein solcher Drehantrieb kann besonders kompakt ausgeführt sein, sodass die Durchlassöffnung und somit der Strömungsweg für die Abluft durch die Anordnung des Verstellantriebs in diesem Bereich wenig eingeschränkt wird.

Eine vorteilhafte Ausgestaltung der Erfindung sieht vor, dass die Kinematik des Getriebes so ausgelegt ist, dass die Schwingbewegung des Verschlusselementes bei der Überführung aus der Verschlussstellung in die Öffnungsstellung in einer ersten Phase der Schwingbewegung hauptsächlich eine Rotationskomponente und in einer nachgelagerten zweiten Phase der Schwingbewegung hauptsächlich eine Translationskomponente aufweist. Mit der Rotation zu Beginn der Schwingbewegung des Verschlusselementes bei der Überführung aus der Verschlussstellung in die Öffnungsstellung kann von der Kinematik des Getriebes eine besonders große Losbrechkraft erzeugt werden, die ein zuverlässiges Lösen des Verschlusselements von der Durchlassöffnung des Mauerkastens auch bei winterlichen Witterungsverhältnissen ermöglicht, selbst wenn das Verschlusselement an der Durchlassöffnung festgefroren sein sollte oder aus sonstigen Gründen festsitzen sollte.

Besonders vorteilhaft ist eine Ausführungsform, die vorsieht, dass das angetriebene Getriebe eine Losbrechkraft von mindestens 150 N auf den ersten 2 mm der Verlagerung des Verschlusselements aus der Verschlussstellung in die Öffnungsstellung erzeugt. Diese Losbrechkraft reicht aus, um das Verschlusselement auch bei winterlichen Witterungsverhältnissen sicher von der Durchlassöffnung zu lösen, selbst wenn dieses in der Verschlussstellung festgefroren sein sollte.

Weitere Merkmale, Einzelheiten und Vorteile der Erfindung ergeben sich aufgrund der nachfolgenden Beschreibung sowie anhand der Zeichnungen, die ein Ausführungsbeispiel der Erfindung zeigen. Einander entsprechende Gegenstände oder Elemente sind in allen Figuren mit den gleichen Bezugszeichen versehen. Es zeigen:
- Figur 1: erfindungsgemäßer Mauerkasten,
- Figur 2: Mauerkasten mit leicht geöffnetem Verschlusselement,
- Figur 3: Mauerkasten ohne das Verschlusselement,
- Figur 4: Schnittansicht durch den Mauerkasten,
- Figur 5: Seitenansicht auf das Verschlusselement in Verschlussstellung
- Figur 6: Seitenansicht auf das Getriebe,
- Figur 7: weitere Seitenansicht auf das Getriebe, und
- Figur 8: Seitenansicht auf das Verschlusselement in Öffnungsstellung.

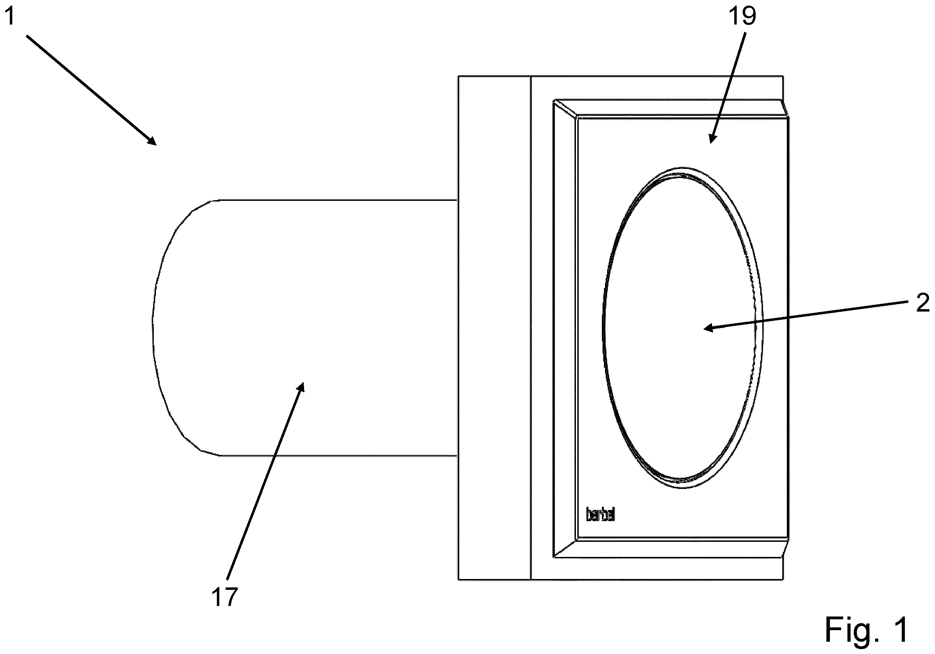

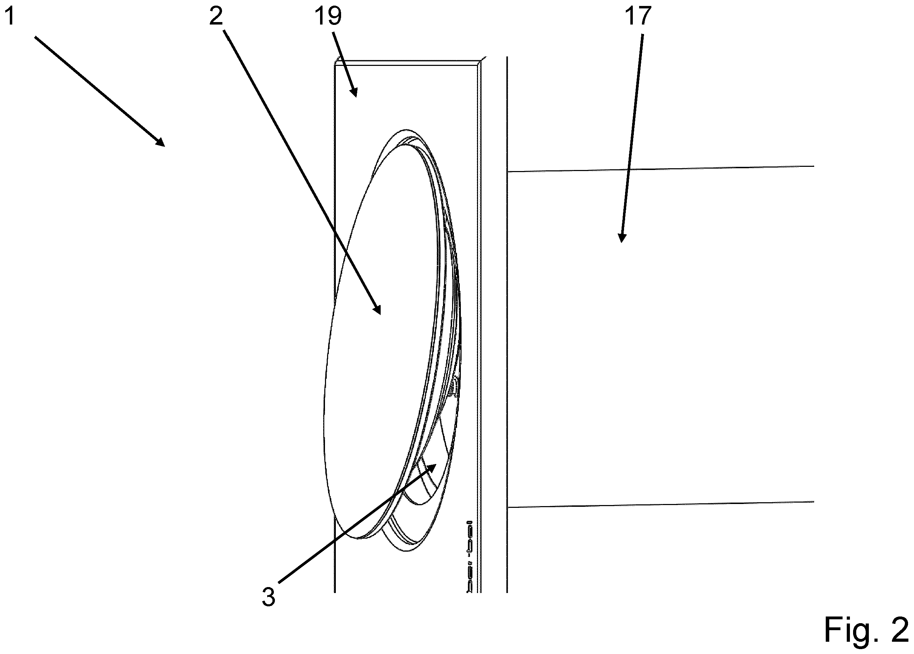

In der Figur 1 mit dem Bezugszeichen 1 bezeichnet ist ein erfindungsgemäßer Mauerkasten dargestellt. Dieser Mauerkasten 1 dient zum Durchlass von Abluft, insbesondere einer Dunstabzugshaube, aus dem Inneren eines Gebäudes nach außen. Hierzu wird der Mauerkasten 1 in eine Öffnung einer nicht gezeigten Gebäudewand eingesetzt. Hierbei wird der Mauerkasten 1 bevorzugt über ein Lüftungsrohr 17 mit der Dunstabzugshaube verbunden, sodass die Abluft der Dunstabzugshaube im Betrieb durch die Gebäudewand aus der Küche nach außen geleitet werden kann. Ist die angeschlossene Dunstabzugshaube außer Betrieb, so dichtet der Mauerkasten 1 die Gebäudewand nach außen ab. Hierzu verfügt der Mauerkasten 1 über ein Verschlusselement 2, das zwischen zwei Stellungen verlagerbar ist. In der hier gezeigten Verschlussstellung verschließt das Verschlusselement 2 eine Durchlassöffnung 3 (Fig. 2) des Mauerkastens 1, durch welche im Betrieb die Abluft der Dunstabzugshaube aus dem Gebäude gelangt. Damit werden das Gebäude und insbesondere das Lüftungsrohr 17 vor äußerer Witterung geschützt, wenn die Dunstabzugshaube abgeschaltet ist. Das Verschlusselement ist als ein im Wesentlichen kreisrunder Verschlussstopfen 2 ausgebildet.

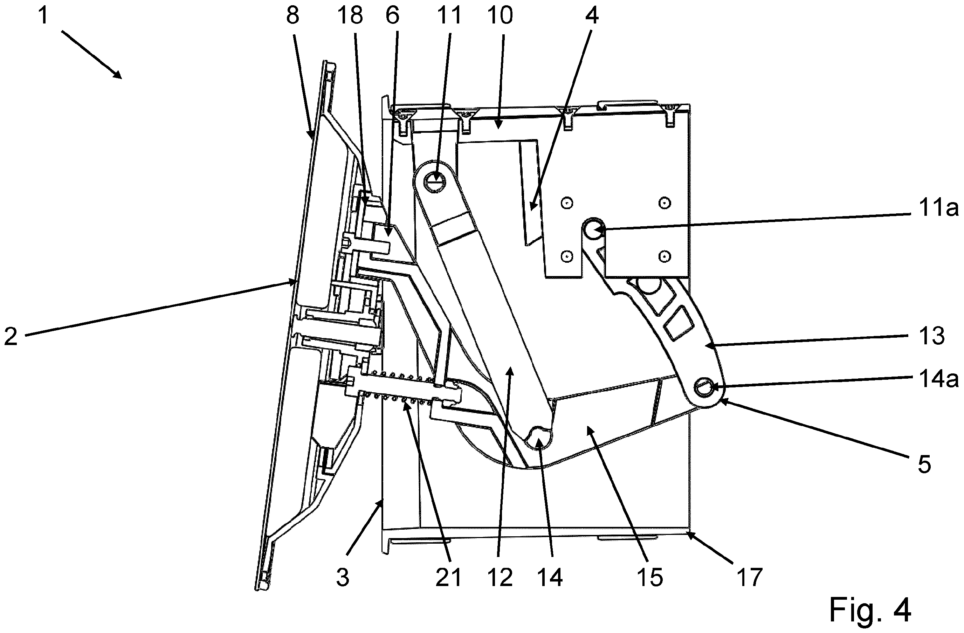

Die Figur 2 zeigt den Mauerkasten 1 gemäß Figur 1 aus einer etwas anderen Perspektive. In dieser Darstellung ist außerdem das Verschlusselement 2 von der Durchlassöffnung 3 leicht abgehoben und verschwenkt. Dies wird durch ein Getriebe 5 (Fig. 4) realisiert, das an das Verschlusselement 2 zur Verlagerung desselben zwischen der Verschlussstellung und der Öffnungsstellung gekoppelt ist und im Folgenden noch näher beschrieben wird. Über das Getriebe 5 (Fig. 4) kann das Verschlusselement 2 auch noch weiter von der Durchlassöffnung 3 entfernt werden, sodass es die Durchlassöffnung 3 in einer Öffnungsstellung vollständig freigibt. Das Getriebe 5 (Fig. 4) wird über einen Verstellantrieb 4 (Fig. 4) angetrieben, sodass das Verschlusselement 2 automatisch zwischen den zwei Stellungen verlagert werden kann.

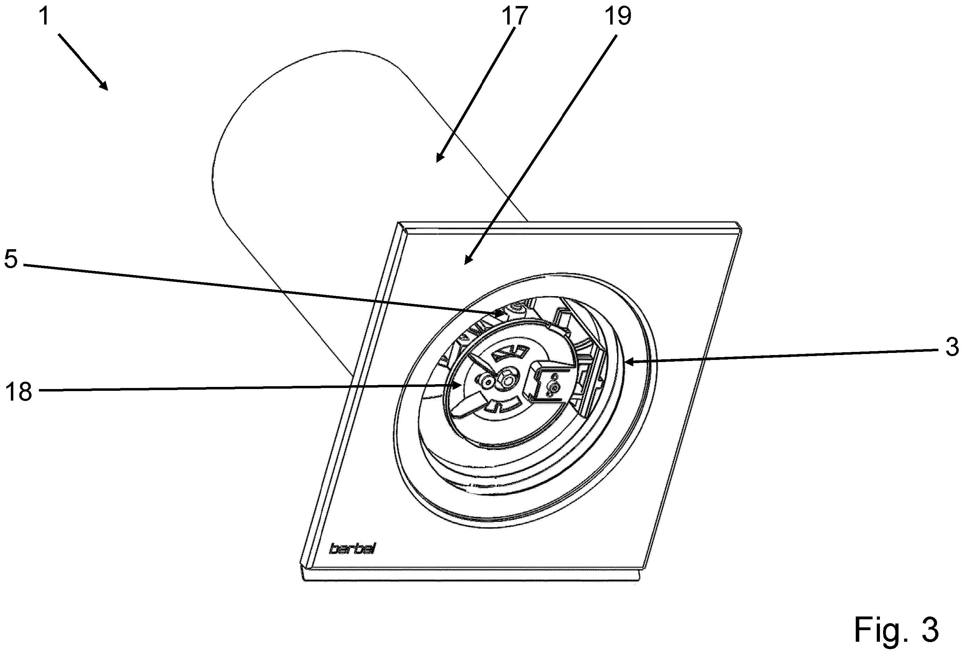

In Figur 3 ist der Mauerkasten 1 gemäß der Figuren 1 und 2 ebenfalls gezeigt, wobei das Verschlusselement 2 (Fig. 1) zur weiteren Erläuterung entfernt wurde. Hierdurch ist erkennbar, dass das Verschlusselement 2 (Fig. 1) bevorzugt an einem gegenüber dem Getriebe 5 verschwenkbaren Aufnahmeteller 18 verrastet ist. Wie in Figur 3 weiter zu erkennen ist, verfügt der Mauerkasten 1 über einen Rahmen 19, der den im Mauerkasten 1 gebildeten Luftweg umschließt und eine vom Verschlusselement 2 (Fig. 2) verschließbare Durchlassöffnung 3 bildet. Das Verschlusselement 2 (Fig. 1) liegt in der Verschlussstellung am Rahmen 19 an und ist in der Öffnungsstellung von der Durchlassöffnung 3 beabstandet positioniert.

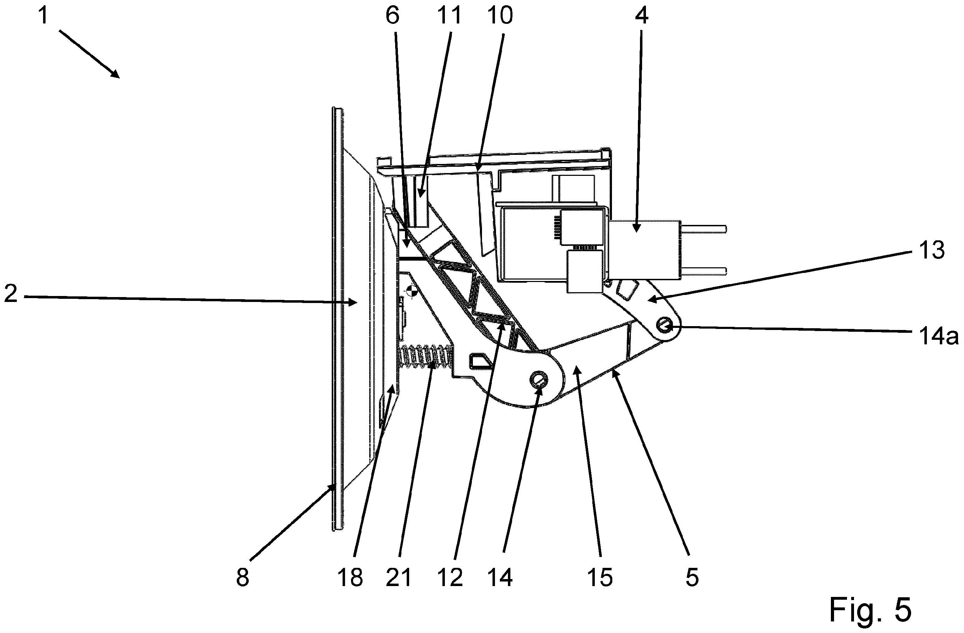

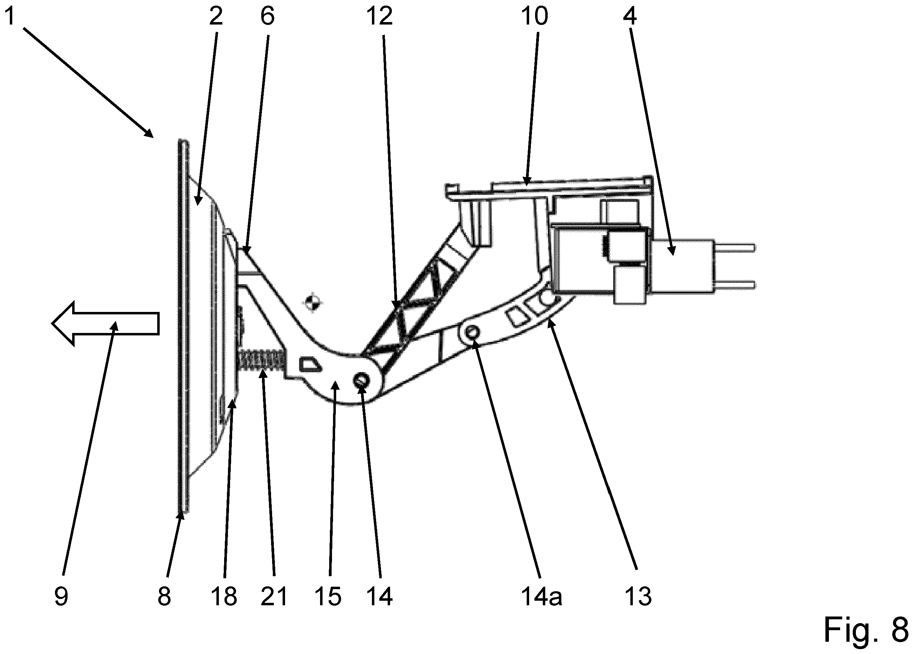

Die Figur 4 stellt eine Schnittansicht durch den Mauerkasten 1 gemäß der Figuren 1 bis 3 dar. In dieser Schnittansicht ist das Verschlusselement 2 ähnlich weit von der Durchlassöffnung 3 angewinkelt angehoben, wie in Figur 2. Hierzu wird das Getriebe 5 von dem Verstellantrieb 4 angetrieben. Das Getriebe 5 ist als ein einfaches, ebenes Drehgelenkgetriebe ausgebildet. Hierzu ist das Getriebe 5 viergliedrig aufgebaut. Es verfügt über ein Gestell 10, zwei mit dem Gestell 10 über jeweils erste Drehgelenke 11, 11a verbundene, unterschiedlich lange Hebelglieder 12, 13 und ein mit beiden Hebelgliedern 12, 13 wiederum jeweils über zweite Drehgelenke 14, 14a verbundenes, an das Verschlusselement 2 gekoppeltes Koppelglied 15. Das Gestell 10 ist an dem Lüftungsrohr 17 befestigt. Der Verstellantrieb 4 ist ein an dem Gestell 10 angeordneter Drehantrieb, der an eines der Hebelglieder 13 drehmomentübertragend gekoppelt ist. Das Getriebe 5 ist dazu ausgelegt, das Verschlusselement 2 hierdurch in einer Schwingbewegung, nämlich einer überlagerten Schwenk- und Schubbewegung aus der Verschlussstellung (Fig. 1 und 5) in die Öffnungsstellung (Fig. 8) zu überführen. Hierdurch lässt sich ein einfacher Mauerkasten zu geringeren Kosten herstellen. So erfordern der Verstellantrieb 4 und das Getriebe 5 außerdem wenig Bauraum, da die Konstruktion nur vergleichsweise geringe Kraftreserven für Extrembedingungen benötigt. Die Schwingbewegung des Verschlusselements 2 aus der Verschlussstellung in die Öffnungsstellung ermöglicht, dass das Verschlusselement 2 auch wenn es an der Durchlassöffnung 3 festsitzt leicht gelöst werden kann. Die von dem Getriebe 5 ausgeübte Schwingbewegung führt dazu, dass das Verschlusselement 2 von der Durchlassöffnung 3 schräg abgeschält wird, sodass der hierfür erforderliche Kraftaufwand vergleichsweise gering ist. Das dargestellte Getriebe 5 erzeugt dennoch eine Losbrechkraft von über 150 N auf den ersten 2 mm der Verlagerung des Verschlusselements 2 aus der Verschlussstellung in die Öffnungsstellung. Ferner verfügt das Getriebe 5 zur Ankopplung an den Verschlusstopfen 2 ein außermittig daran angeordnetes Gelenk 6, um das der Verschlussstopfen 2 entgegen einer elastischen Rückstellkraft verschwenkbar ist. Dieses Gelenk 6 ist bevorzugt als Membrangelenk ausgeführt. Die elastische Rückstellkraft wird von einem zwischen dem Verschlusselement und Getriebe angeordneten Federelement 21 erzeugt. Dieses Federelement 21 ist so angeordnet, dass das Verschlusselement 2 bei Verlagergung aus der Verschlussstellung in die Öffnungsstellung, bevorzugt wie hier am Koppelglied 15, gegen die Federkraft verschwenkbar ist und das Verschlusselement 2 bei Entlastung der Feder mittels der Federkraft entgegen der Verschwenkbewegung ausgerichtet wird. Über eine entgegengesetzte Antriebsrichtung des Verstellantriebs 4 kann das Verschlusselement 2 über das Getriebe 5 auch wieder von der Öffnungsstellung in die Verschlussstellung verlagert werden.

Diese Verschlussstellung ist in Figur 5 zu sehen, welche eine Seitenansicht auf das Verschlusselement 2 an dem entsprechend betätigten Getriebe 5 zeigt. In der Verschlussstellung kann das Federelement 21 auf Zug belastet sein, sodass mit dem Verschlusselement 2 ein dichter Verschluss der Durchlassöffnung 3 (Fig. 4) über die passende Ausrichtung des Verschlusselements 2 mittels des Federelements 21 realisiert wird. Es ist erkennbar, wie die Hebelglieder 12, 13 das an das Verschlusselement 2 gekoppelte Koppelglied 15 in Richtung der Durchlassöffnung 3 (Fig. 4) verlagern können.

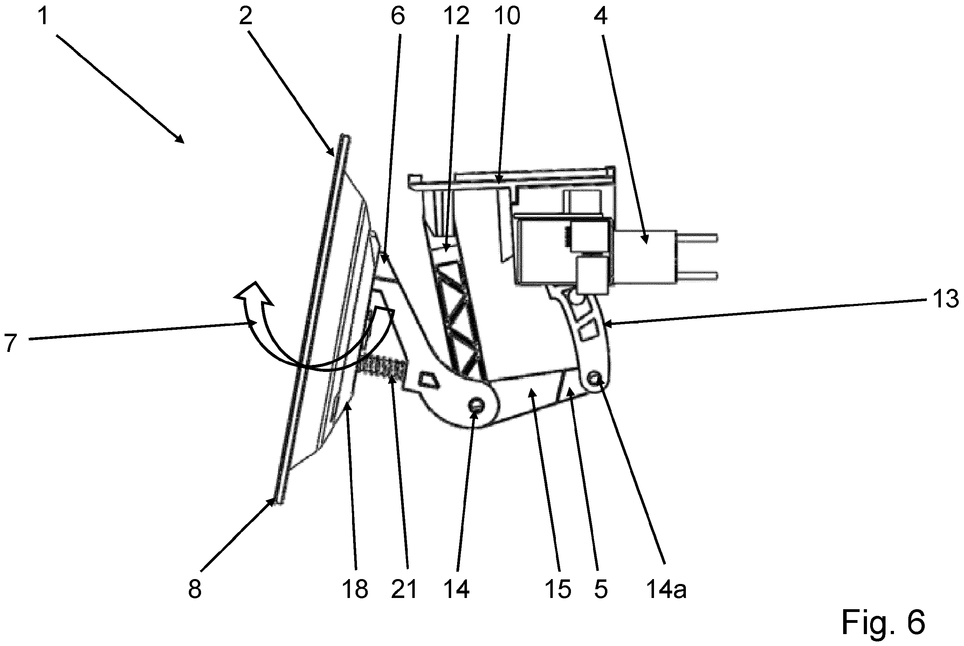

Die Figur 6 zeigt hingegen eine Seitenansicht auf das Getriebe 5 während der ersten Phase der Schwingbewegung. Die Kinematik des Getriebes 5 ist so ausgelegt, dass in dieser ersten Phase der Bewegung des Verschlusselementes 2 bei der Überführung aus der Verschlussstellung in die Öffnungsstellung die Schwingbewegung hauptsächlich eine Rotationskomponente 7 aufweist, welche das Verschlusselement 2, wie in Figur 6 zu sehen ist, gegenüber der Durchlassöffnung 3 (Fig. 4) verkippt. Die Schwenkbewegung weist also eine Rotationskomponente 7 mit einer Rotationsachse in einer Ebene 8 des Verschlussstopfens 2 auf.

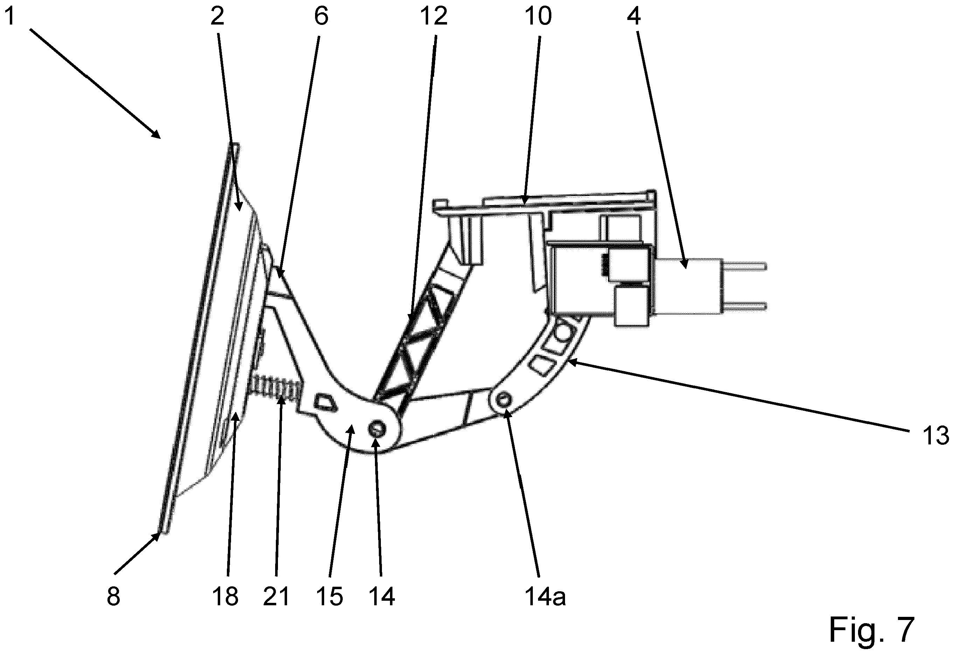

Erst in einer nachgelagerten zweiten Phase der Bewegung, welche in etwa in der in Figur 7 gezeigten Hebelstellung beginnt, hat die Schwingbewegung hauptsächlich eine Translationskomponente 9, welche das Verschlusselement 2 in die in Figur 8 gezeigte Öffnungsstellung verlagert. Die Translationskomponente 9 der Schubbewegung ist in Richtung senkrecht zur Ebene des Verschlussstopfens 2 gerichtet.

In Figur 8 ist eine Seitenansicht auf das Verschlusselement 2 in Öffnungsstellung gezeigt. In dieser Stellung kann das Verschlusselement 2 ausreichend weit vor der Durchlassöffnung 3 des Mauerkastens positioniert werden, sodass die Abluft nicht am Ausströmen gehindert wird.

### Bezuaszeichenliste

1 Mauerkasten
2 Verschlusselement (Verschlussstopfen)
3 Durchlassöffnung
4 Verstellantrieb
5 Getriebe
6 Gelenk
7 Rotationskomponente
8 Ebene
9 Translationskomponente
10 Gestell
11 11a Erste Drehgelenke
12 Erstes Hebelglied
13 Zweites Hebelglied
14 14a Zweite Drehgelenke
15 Koppelglied
17 Lüftungsrohr
18 Aufnahmeteller
19 Rahmen
21 Federelement

## Patentansprüche

1. Mauerkasten (1) zum Durchlass von Abluft aus dem Inneren eines Gebäudes durch eine Gebäudewand nach außen, mit
- einem zwischen mindestens zwei Stellungen verlagerbaren Verschlusselement (2), das dazu ausgelegt ist, eine Durchlassöffnung (3) des Mauerkastens (1) in einer Verschlussstellung zu verschließen und in einer Öffnungsstellung freizugeben,
- einem Verstellantrieb (4), und
- wenigstens einem von dem Verstellantrieb (4) angetriebenen Getriebe (5), das an das Verschlusselement (2) zur Verlagerung desselben zwischen der Verschlussstellung und der Öffnungsstellung gekoppelt ist,
**dadurch gekennzeichnet,**
**dass** das Getriebe (5) dazu ausgelegt ist, das Verschlusselement (2) in einer Schwingbewegung, nämlich einer überlagerten Schwenk- und Schubbewegung aus der Verschlussstellung in die Öffnungsstellung zu überführen.

2. Mauerkasten nach Anspruch 1, **dadurch gekennzeichnet, dass** das Verschlusselement ein im Wesentlichen kreisrunder Verschlussstopfen (2) ist.

3. Mauerkasten nach Anspruch 2, **dadurch gekennzeichnet, dass** das Getriebe (5) zur Ankopplung an den Verschlusstopfen (2) ein außermittig daran angeordnetes Gelenk (6) umfasst, um das der Verschlussstopfen (2) entgegen einer elastischen Rückstellkraft verschwenkbar ist.

4. Mauerkasten nach Anspruch 2 oder 3, **dadurch gekennzeichnet, dass** die Schwenkbewegung eine Rotationskomponente (7) mit Rotationsachse in einer Ebene (8) des Verschlussstopfens (2) aufweist, wobei die Schubbewegung eine Translationskomponente (9) in Richtung senkrecht zur Ebene des Verschlussstopfens (2) aufweist.

5. Mauerkasten nach einem der Ansprüche 1 bis 4, **dadurch gekennzeichnet, dass** das Getriebe (5) ein ebenes Drehgelenkgetriebe ist.

6. Mauerkasten nach Anspruch 5, **dadurch gekennzeichnet, dass** das Getriebe (5) viergliedrig ist und ein Gestell (10), zwei mit dem Gestell (10) über jeweils ein Drehgelenk (11, 11a) verbundene, unterschiedlich lange Hebelglieder (12, 13) und ein mit beiden Hebelgliedern (12, 13) wiederum jeweils über ein Drehgelenk (14, 14a) verbundenes, an das Verschlusselement (2) gekoppeltes Koppelglied (15) umfasst.

7. Mauerkasten nach Anspruch 6, **dadurch gekennzeichnet, dass** der Verstellantrieb (4) ein an dem Gestell (10) angeordneter Drehantrieb ist, der an eines der Hebelglieder (12, 13) drehmomentübertragend gekoppelt ist.

8. Mauerkasten nach einem der Ansprüche 1 bis 7, **dadurch gekennzeichnet, dass** die Kinematik des Getriebes (5) so ausgelegt ist, dass die Bewegung des Verschlusselementes (2) bei der Überführung aus der Verschlussstellung in die Öffnungsstellung in einer ersten Phase der Bewegung hauptsächlich eine Rotationskomponente (7) und in einer nachgelagerten zweiten Phase der Bewegung hauptsächlich eine Translationskomponente (9) aufweist.

9. Mauerkasten (1) nach einem der vorhergehenden Ansprüche, **dadurch gekennzeichnet, dass** das angetriebene Getriebe (5) eine Losbrechkraft von mindestens 150 N auf den ersten 2 mm der Verlagerung des Verschlusselements (2) aus der Verschlussstellung in die Öffnungsstellung erzeugt.
